Europäisches Patentamt

European Patent Office

Office européen des brevets

(19)

(11) Veröffentlichungsnummer: **0 362 545**
**B1**

(12) **EUROPÄISCHE PATENTSCHRIFT**

(45) Veröffentlichungstag der Patentschrift: **16.01.91**

(51) Int. Cl.⁵: **B 23 H 7/02,** B 23 H 7/10

(21) Anmeldenummer: **89115810.7**

(22) Anmeldetag: **28.08.89**

(54) Verfahren und Vorrichtung zum selbsttätigen und wiederholbaren Einfädeln des Schneiddrahtes an einer Drahterodiermaschine.

(30) Priorität: **30.08.88 DE 3829302**

(43) Veröffentlichungstag der Anmeldung:
**11.04.90 Patentblatt 90/15**

(45) Bekanntmachung des Hinweises auf die
Patenterteilung:
**16.01.91 Patentblatt 91/03**

(84) Benannte Vertragsstaaten:
**CH DE FR GB IT LI**

(56) Entgegenhaltungen:
**EP-A-0 206 041**
**DE-C-3 037 505**
**US-A-4 598 189**
**US-A-4 698 478**

(73) Patentinhaber: **SCHIESS AG Geschäftsbereich**
**Schiess-Nassovia**
**Nassoviastrasse 2**
**D-6070 Langen (DE)**

(72) Erfinder: **Bopp, Konrad Josef**
**Ulmenweg 2**
**D-8903 Bobingen (DE)**
Erfinder: **Töpfer, Klaus**
**Im Espenloh 34**
**D-6087 Worfelden (DE)**
Erfinder: **Wauer, Gerd**
**Hainbuchweg 10**
**D-6750 Kaiserslautern (DE)**

(74) Vertreter: **Allgeier, Kurt**
**Postfach 14 27**
**D-7888 Rheinfelden (DE)**

EP 0 362 545 B1

## Beschreibung

Die Erfindung betrifft ein Verfahren und eine Vorrichtung zum selbsttätigen und wiederholbaren Einfädeln eines Schneiddrahtes an einer Drahterodiermaschine und zum selbsttätigen Abtrennen des Schneiddrahtes bei Drahtbruch oder bei Werkstückwechsel.

Bei dieser Maschinengattung ist die Aufgabe des selbsttätigen Einfädelns des Schneiddrahtes bei Beginn der Bearbeitung oder bei gewollten oder ungewollten Betriebsunterbrechungen immer noch nicht zufriedenstellend gelöst.

Es sind zahlreiche Verfahren und Vorrichtungen zu diesem Zweck bei Drahterodiermaschinen bekannt. Beispielsweise wird bei einigen bekannten Maschinen dieser Gattung der Schneiddraht mittels eines dünnen Rölrchens von etwa 3 mm Durchmesser als Führungselement durch die Startbohrung des Werkstücks geführt. Zur Drahtförderung wird teils ein Luft- oder ein Flüssigkeitsstrom benutzt; bei einzelnen Lösungen wird der Draht durch Strecken versteift und durch die Startbohrung des Werkstücks gestoßen. Die Schneiddrahteinfädelung mittels eines Röhrchens hat den Nachteil, daß das Röhrchen vom Querschnitt her ziemlich dick sein muß — ca. 3 mm — und daß die Einfädelung in das Röhrchen selbst nicht zuverlässig genug ist.

Es sind noch andere Schneiddraht-Einfädelverfahren bekannt, beispielsweise aus dem DE—GM 86 15 006.5, bei der der Draht vor dem Durchführen durch das Werkstück zuerst erhitzt und dann gestreckt und dadurch versteift wird, was das Durchführen durch die Startbohrung im Werkstück und das Einfädeln in die Drahtführungsorgane erleichtern soll. Weiterhin wird in der DE PS 30 375 05 ein Schneiddrahteinfädelverfahren beschrieben, bei dem eine Startbohrung mittels einer Funkenerosionselektrode hergestellt und in dieser Durchbohrung des Werkstückes der Schneiddraht an die Elektrode angeschweißt und danach durch das Werkstück gezogen wird. Darauf muß der Schneiddraht noch von der Elektrode getrennt und dem Abtransportsystem zugeführt werden.

Von modernen Funkenerosionsmaschinen wird heute gefordert, daß sie wenigstens 72 Stunden bedienerlos voll funktionsfähig arbeiten, was durch automatischen Werkzeug- und Werkstückwechsel ermöglicht wird. Ebenso muß hierbei ein absolut zuverlässiges und funktionssicheres Einfädelverfahren des Schneiddrahtes bereitgestellt werden können, wenn diese 72-Stunden-Maschinenautonomie erreicht werden soll.

Dies ist aber nur dann der Fall, wenn der Schneiddraht mit absoluter Sicherheit durch die oft mehrfachen Öffnungen des Werkstücks hindurchgeführt werden kann. Wenn eine Öffnung bearbeitet ist, wird der Erosionsprozeß unterbrochen, der Schneiddraht abgeschnitten und durch die nächste Öffnung hindurchgeführt.

Ebenso muß die Wiederholeinfädelung des Schneiddrahtes zuverlässig funktionieren, wenn der Draht wegen sonstiger Betriebsstörungen, wie mechanischer oder elektrischer Überlastung, Drahtmaterialfehler oder dergleichen zu Bruch geht. Bei mehrfachem automatischem Werkstückwechsel sind noch längere Zeitspannen an Maschinenautonomie erforderlich. Deshalb muß der Schneiddrahteinfädelvorgang praktisch unbegrenzt oft und sicher funktionieren.

Dies ist bei den bekannten Einfädelungssystemen nicht der Fall, was sich aus der Anweisung an das Steuersystem solcher Maschinen ergibt. So lautet z.B. der programmgespeicherte Steuerhinweis bei einer bekannten Maschine, den Schneiddrahteinfädelvorgang beim Fehlversuch bis zu sechs Mal zu wiederholen und danach schaltet die Steuerung auf "Operator", also manuellen Eingriff. Damit ist die Maschinenautonomie unterbrochen, was bedeutet, daß in einem solchen Falle Bedienungspersonal vorhanden sein muß.

Die Erfindung geht zu einem Teil der verfahrenstechnischen und vorrichtungstechnischen Auslegung aus von einem Stand der Technik, wie er in der DE—PS 30 14 084 beschrieben und dargestellt ist, bei welchem ein von menschlichen Eingriffen und einer Überwachung durch Bedienungspersonal weitgehend unabhängiger Arbeitsablauf erzielt werden soll, was besonders bei Werkstücken mit einer großen Zahl von herzustellenden Durchbrechungen von großer Bedeutung ist. Dort wird der Anfangsabschnitt des Elektrodendrahtes zwar in bekannter Weise in den Strahlquerschnitt eines gerichteten Flüssigkeitsstrahles eingeleitet und innerhalb dieses Strahles mit einer gegenüber der Strahl-Strömungsgeschwindigkeit geringeren Vorschubgeschwindigkeit — also ohne das Hilfsmittel eines feststehenden Röhrchens — geführt.

Dadurch soll auf den Draht infolge der Flüssigkeitsreibung wegen der Relativbewegung zwischen den Geschwindigkeiten des Flüssigkeitsstroms und der Drahtbewegung eine starke Spannung in Längsrichtung herbeigeführt werden, wodurch er in gestreckter Form gehalten werden soll, und zwar unabhängig von Unebenheiten, Vorsprüngen und anderen Bewegungshemmnissen innerhalb des Arbeitsraumes. Der Drahtanfang soll sogar um leichte Abwinkelungen von Führungs- und Kontaktelementen vom Strahl herumgeführt werden können.

Entgegen diesen Ausführungen hat sich jedoch erwiesen, daß auch dieses Verfahren keine ausreichende Sicherheit bietet, weil die behauptete Streckung und damit Geraderichtung des Schneiddrahtes nicht mit genügender Zuverlässigkeit erreicht wird.

Die Erfindung geht von der Erkenntnis aus, daß zur absoluten Zuverlässigkeit und Sicherheit der Geradführung des Schneiddrahtes andere Verfahrensweisen angewendet werden müssen, und sie hat einen von allen bisherigen Überlegungen und Vorschlägen zur Lösung dieses schwierigen Problems völlig neuen Weg beschritten und eine überraschend einfache Lösung gefunden, die einen mit absoluter Zuverlässigkeit und Sicherheit funktionierenden Einfädelvorgang des Schneiddrahtes gewährleistet.

Damit löst die Erfindung die Aufgabe, ein Verfahren und eine Vorrichtung zu schaffen, die in einfacher und beliebig oft wiederholbarer Weise den Wechsel des Schneiddrahtes von einer Drahtführöffnung in einem Werkstück (Startbohrung) zu einer anderen und zu den nachgeschalteten Drahtführungsorganen mit absoluter Sicherheit ermöglicht, so daß von der Seite der Funktionssicherheit der Schneiddrahteinfädelung einer Verlängerung der Maschinenautonomie-Zeitdauer keine Hindernisse mehr im Wege stehen.

Diese Aufgabe wird bei einer gattungsgemäßen Maschine dadurch gelöst, daß der von einer Vorratsrolle abgezogene, innerhalb eines in einer Drahtzubringer-Achse liegenden Drahtzubringerabschnitts laufende und bremsbare Schneiddraht in den Bereich eines Draht-Arbeitsabschnittes gefördert und dort in das Nadelöhr einer bereitstehenden, in einem Winkel zur Drahtzubringer-Achse verlaufenden Drahtarbeits-Achse verschiebbaren und aus dem Draht-Arbeitsabschnitt entfernbaren Nadel zum Drahteinfädeln mit einem kleinen Überstand eingefädelt, von der Nadel unter Bilden einer Drahtschlinge in einen Nadelkanal in der Richtung der Drahtarbeits-Achse gezogen und durch die im Draht-Arbeitsabschnitt liegende Startbohrung des Werkstücks geleitet und innerhalb eines in einer in einem Winkel zur DrahtarbeitsAchse verlaufenden Drahtabförder-Achse liegenden Draht-Förderungsabschnitts zwischen Draht-Abzugsorganen einer Drahtsammelkammer zugeführt wird.

Durch die Erfindung werden alle die Fachwelt seit Jahrzehnten beschäftigenden Schwierigkeiten der Drahteinfädelung, die zu Dutzenden von Vorschlägen und Systemen geführt haben, mit einem Schlag überwunden. Insbesondere gilt dies für die Schwierigkeiten, die bisher mit dem Strecken oder Erwärmen und Strecken des Schneiddrahtes zum Geraderichten verbunden waren. Auch die aufwendigen und trotzdem unsicheren Verfahrensweisen der Förderung mittels eines Strömungsmediums, sei es innerhalb eines Röhrchens oder ohne Röhrchen, entfallen.

Infolge der Zwangsförderung des Schneiddrahtes mittels einer in der Drahtarbeitsachse beweglichen Einfädelnadel in Verbindung mit der Erzeugung einer beliebig zu bemessenden Spannung des Schneiddrahtes auf Grund der in der Drahtzubringer-Achse ausübbaren Bremswirkung zwischen Drahtzuführung und Einfädelnadel sind auch alle mit der Erzeugung dieser Drahtspannung verbundenen Probleme behoben. Wegen der Zwangseinfädelung des Schneiddrahtes in das Nadelöhr der Einfädelnadel und des Durchziehens des Drahtes unter Bremsspannung durch den Draht-Arbeitsabschnitt können beim Einführen des Drahtanfanges in die Startbohrung des Werkstückes keine Fehl-Einfädelungen entstehen, weil die in der Drahtarbeits-Achse bewegliche Einfädelnadel den Schneiddraht durch die Startbohrung hinter sich herzieht. Auch bei dem Einführen des Schneiddrahtes in die Drahtabzugsorgane kann es keine der bisher üblichen Schwierigkeiten geben, da auch hier ein Zwangstransport des Drahtes mittels der Einfädelnadel stattfindet.

Weitere Verfahrensmerkmale bestehen noch darin, daß innerhalb eines zwischen dem Draht-Arbeitsabschnitt und dem Draht-Abförderabschnitt eingeschobenen Drahtgeschwindigkeits-Sensorabschnitts ein die Drahtgeschwindigkeit messende Geschwindigkeits-Sensor eingeschaltet ist, sowie, daß im Drahtgeschwindigkeits-Sensorabschnitt der Schneiddraht aus der Drahtarbeits-Achse in die Drahtabförder-Achse umgelenkt wird.

Der zwischen dem Draht-Arbeitsabschnitt und dem Draht-Abförderabschnitt des Einfädelverfahrens eingeschobene Drahtgeschwindigkeits-Sensorabschnitt hat die Aufgabe, die Drahtgeschwindigkeit vor der Überleitung in den Drahtabförderabschnitt zu messen. Durch den an dieser Stelle ermittelten Geschwindigkeits-Meßwert werden die Bremskräfte im Draht-Zubringerabschnitt und die Drahtabzugskräfte im Draht-Abförderabschnitt beeinflußt und aufeinander abgestimmt, so daß die Drahtspannung auf einem optimal eingestellten Wert konstant gehaltenwerden kann. Außerdem wird im Bereich des Drahtgeschwindigkeits-Sensorabschnitt der Schneiddraht aus der Drahtarbeits-Achse in die Drahtabförder-Achse umgelenkt.

Nach weiteren wichtigen Verfahrensmerkmalen ist vorgesehen, daß innerhalb des Draht-Zubringerabschnitts und vor der Umlenkung in den Draht-Arbeitsabschnitt mittels eines Sensors der Durchlauf des Schneiddrahts kontrolliert und bei Drahtbruch oder Werkstückwechsel abgeschnitten wird, und ferner weiterhin, daß der Schneiddraht in der Drahtarbeitsachse zwischen dem Werkstück und dem Zuführen zu dem Draht-Förderabschnitt öffen- und um den Schneiddraht schließbare Drahtzugrolle durchläuft.

Ein grundsätzliches Unterscheidungsmerkmal des Verfahrens gegenüber nahezu allen bekannten Drahterodiermaschinen besteht noch darin, daß der in vertikaler Richtung verlaufende Schneiddraht außer von oben nach unten vorzugsweise von unten nach oben in der vertikalen Drahtarbeits-Achse gefördert werden kann.

Die vorrichtungsmäßige Ausbildung des Erfindungsgedankens zur Durchführung des Verfahrens geht von einer bekannten Vorrichtung zum selbsttätigen, wiederholbaren Einfädeln des Schneiddrahtes an einer Drahterodiermaschine und zum selbsttätigen Abtrennen des Schneiddrahtes bei Drahtbruch oder Werkstückwechsel aus, die aus einem Draht-Zubringerteil mit Zubringerrollen oder -elementen, einem Draht-Arbeitsabteil besteht, innerhalb desselben sich das Werkstück befindet, sowie außerdem einem Draht-Abförderteil, der mit Abzugsrollen oder -elementen ausgerüstet ist. Sie ist gekennzeichnet durch

a) im Draht-Arbeitsabschnitt beidseitig des Werkstücks in der Drahtarbeits-Achse angeordnete Zu- und Abführungsköpfe mit Schneiddrahtführungselementen,

b) im Draht-Arbeitsabschnitt in Richtung zum Draht-Abförderförderabschnitt in der Drahtarbeits-Achse einander gegenüberliegend angeordnete, öffenbare und um den Schneiddraht schließbare, angetriebene Drahtzugorgane,

c) außerhalb des Draht-Arbeitsabschnitts, jedoch in dessen Drahtarbeits-Achse liegend, eine Führungs- und Antriebsvorrichtung für eine Nadel mit einem Nadelöhr zum Einfädeln des Schneiddrahtes, die zwischen einer Position außerhalb des Draht-Arbeitsabschnittes und in einer eingefahrenen Stellung im Bereich des Draht-Zubringerabschnitts in ihrer Längsachse hin- und herbewegbar ausgebildet ist.

Diese vorrichtungsmäßige Ausbildung zur Durchführung des Verfahrens weist im Draht-Arbeitsabschnitt vor allem zwei Drahtführungsköpfe für die Zu- und Abführung des Schneiddrahtes auf, die beidseits des Werkstücks und so nahe an dieses wie möglich angeordnet und/oder anstellbar sind. Diese beiden Drahtführungsköpfe sind innerhalb des Gesamt-Schneiddrahtsystems relativ zueinander in den u- und v-Achsen verstellbar, um ein konisches Schneiden zu ermöglichen. Selbstverständlich ist der Draht-Arbeitsabschnitt auch mit Auflageflächen und Vorrichtungen zum Aufspannen und/oder Wechseln — gegebenenfalls mittels Paletten — der zu bearbeitenden Werkstücke ausgestattet.

Außerdem sind im Draht-Arbeitsabschnitt einander gegenüberliegend öffen- und um den Schneiddraht schließbare Drahhtzugorgane angeordnet, die als Rollen oder Bänder ausgebildet sein können. Diese Rollen- oder Bänderpaare — es können auch mehrere Rollen- oder Bänderpaare sein — werden zum Durchtritt der Einfädelnadel geöffnet und schließen sich selbsttätig, sobald die Einfädelnadel den Draht-Arbeitsabschnitt nach oben verlassen hat. Diese Drahtzugorgane sind in der Regel angetrieben; sie können jedoch auch ohne eigene Antriebe sein, wenn die Zugspannung auf den Schneiddraht von den Zugorganen des Draht-Abförderabschnitts aufgebracht wird. Die Antriebe dieser Rollen- oder Bänderpaare werden durch den Geschwindigkeitsabgriff des Geschwindigkeitssensors gesteuert.

Die wesentlichen Merkmale dieses Teils der Vorrichtung bestehen in der Führungs- und Antriebsvorrichtung für die Nadel mit dem Nadelöhr zum Einfädeln des Schneiddrahtes. Diese kann in der Drahtarbeitsachse ihren Funktionshub zwischen einer Position außerhalb des Draht-Arbeitsabschnitts und in ihrer eingefahrenen Stellung im Bereich des Draht-Zubringerabschnitts durch Hin- und Herbewegen in ihrer Längsachse ausführen. In der eingefahrenen Stellung liegt ihr Nadelöhr genau in der Drahtzubringer-Achse, so daß der von Drahtzubringerrollen oder Drahtzubringerbändern bewegte Draht mit seiner Spitze direkt in das Nadelöhr und zwar so weit eingeführt wird, daß von einer Sensorschaltung überwacht ein kleiner Überstand vorhanden ist, der ausreicht, beim Vorwärtshub der Einfädelnadel im Drahtführungskanal durch ein Umbiegen des Überstandes die Bildung einer Schlinge hervorzurufen.

Eine zur Erhöhung der Funktionssicherheit zweckmäßige Vorrichtungsmaßnahme besteht noch darin, daß in einem zwischen dem Draht-Arbeitsabschnitt und dem Draht-Abförderabschnitt eingeschalteten zusätzlichen Drahtgeschwindigkeits-Sensorabschnitt um eine ortsfeste Achse schwenkbar ein Schwenkarm gelagert ist, der mit einem die Geschwindigkeit des Schneiddrahtes abtastenden Geschwindigkeits-Sensor versehen ist. Dabei kann als Abtastorgan des Geschwindigkeits-Sensors eine an den in der Drahtarbeits-Achse laufenden Schneiddraht anpreßbare und von diesem zu etwa einem Viertel ihres Umfangs umschlungene Sensor-Rolle dienen. Besonders vorteilhaft ist die Anordnung, wenn nach einem weiteren Merkmal die Sensorrolle zugleich der Umlenkung des Schneiddrahtes aus der Drahtarbeits-Achse im Draht-Arbeitsabschnitt in die Drahtabförder-Achse des Draht-Abförderabschnitts dient.

Im Bereich des Draht-Zubringerabschnitts ist vorgesehen, daß zwischen einer Drahtvorratsspule und der Drahtarbeits-Achse des Draht-Arbeitsabschnittes einander gegenüberliegend zwei endlose, über Umlenkrollen geführte, in einer Zubringer-Achse verlaufende Drahtzubringerbänder angeordnet sind. Dabei können eine oder mehrere Umlenkrollen mit Antrieben versehen sein.

Um die Überleitung des Schneiddrahtes vom Draht-Zubringerabschnitt in den Draht-Arbeitsabschnitt zu bewerkstelligen, ist eine Draht-Umlenkrolle zum Umlenken aus Zubringer-Achse in die Drahtarbeits-Achse vorgesehen, gegenüber welcher eine fernsteuerbar regelbare Drahtbremsrolle angeordnet ist, wobei eine der beiden oder beide Rollen den Schneiddraht zwischen sich aufnehmend gegeneinander anstellbar sind.

Der Schneiddraht wird in der Drahtzubringer-Achse von den Zuführorganen in einem Drahtzuführkanal vorwärtsgefördert und in das Nadelöhr der Einfädelnadel eingeführt, die in einem Nadelkanal beweglich ist, welcher den Drahtzuführkanal kreuzt; diese Kanäle können in einem Drahtumlenkblock angeordnet sein.

Nach einem weiteren Merkmal ist vorgesehen, daß die Drahtzugorgane als in Querrichtung zur Drahtarbeits-Achse verschiebund an den Schneiddraht mittels Spannvorrichtungen anpressbare Drahtzugrollen oder Drahtzugbänder ausgebildet sowie mit fernsteuerbar regelbaren Anstell-Antrieben ausgerüstet sind.

Eine wesentliche Besonderheit der Erfindung besteht noch darin, daß im Schneiddraht-Abförderabschnitt in der Abförder-Achse verlaufend und in dieser fernsteuerbar hin- und herbeweglich ein Drahtabzugsgestell angeordnet ist, in welchem mit fernsteuerbar geschwindigkeitsregelbaren Antrieben versehene Abzugsrollen für einander gegenüberliegende und den Schneiddraht zwischen sich führende Draht-Abzugsbänder gelagert sind. Durch diese Vorrichtung, die während des Einfädelvorganges aus der Drahtarbeits-Achse zurückgezogen ist und daher die Einfädelnadel freigibt, wird nach dem Rückhub der Einfädelnadel und Freigabe der Drahtarbeits-Achse der Schneiddraht erfaßt, in dem die Drahtabzugsbänder diesen beidseitig umschließen und in der Drahtabförder-Achse abziehen. Um dies zu erleichtern, verlaufen die Rollenachsen der Abzugsrollen parallel zur Drahtarbeits-Achse, d.h. die Funktionsebene zwischen den Draht-Abzugsbändern verläuft in der Drahtarbeits-Achse.

Weitere Merkmale und Besonderheiten der Erfindung sind anhand des in der Zeichnung dargestellten Ausführungsbeispiels näher beschrieben und erläutert.

Es zeigen

Fig. 1 bis Fig. 6 eine Vorrichtung zur Durchführung des Verfahrens in schematischer Darstellung in Seitenansicht;

Fig. 7 die Darstellung nach Fig. 1 in Richtung Z;

Fig. 8 einen Ausschnitt aus den Darstellungen gem. Fig. 1 bis 6.

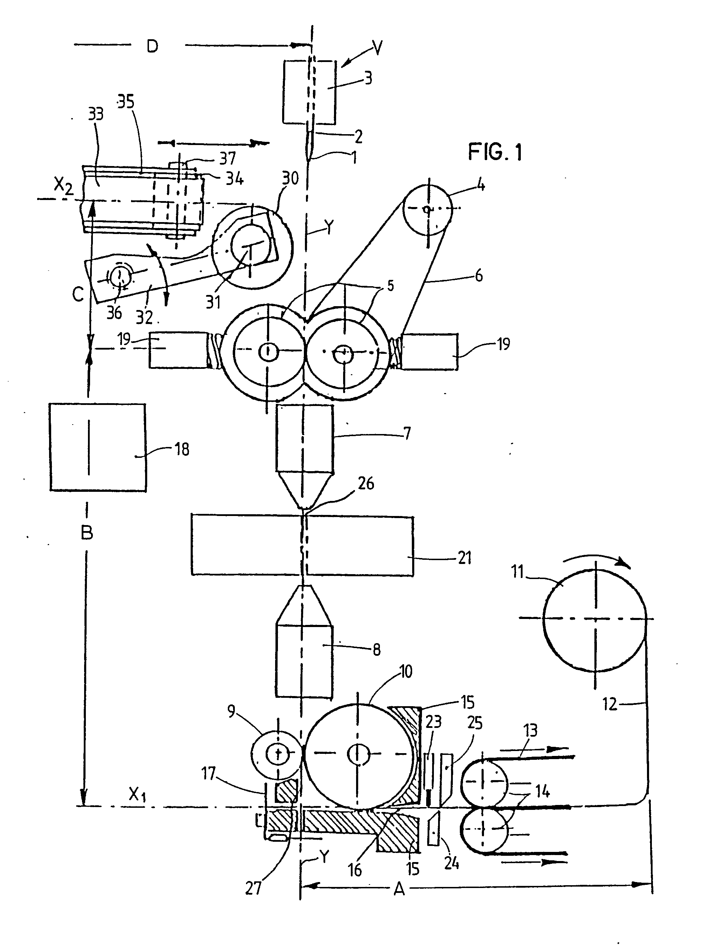

Die Fig. 1 bis 6 zeigen die Vorrichtung nach der Erfindung und die wesentlichen Ablaufphasen des Schneiddrahteinfädelvorganges, beginnend mit dem Abzug des Schneiddrahts 12 von der Vorratsspule 11 mittels der horizontalen Drahtzubringerbänder 13 bis zur Schneiddrahtabführung mittels der DrahtAbzugsbänder 33 und der Zuführung zur Drahtsammelkammer 18 für den verbrauchten Schneiddraht.

Bei dem dargestellten Ausführungsbeispiel verlaufen die Drahtzubringer-Achse $x_1$ und die Drahtabförder-Achse $x_2$ parallel, und beide Achsen stehen in einem rechten Winkel zur vertikal verlaufenden Drahtarbeits-Achse y. Für alle drei Achsen sind auch andere Lagen und Zuordnungen möglich.

In den Figuren ist die Nadel zum Drahteinfädeln mit 1 und deren Nadelöhr mit 2 bezeichnet. Die Nadelführung 3 mit ihren nicht näher dargestellten Antriebs- und Steuervorrichtungen befindet sich in der Drahtarbeits-Achse y, jedoch oberhalb des Draht-Arbeitsabschnitts B. Die Nadel 1 ist in der Drahtarbeits-Achse y einen Hub ausführend auf- und abbeweglich.

Von der Drahtvorratsspule 11 wird — wie aus Fig. 1 ersichtlich — der Schneiddraht 12 abgezogen und durch die Drahtzubringerbänder 13 in den Drahtzuführkanal 16 eingeleitet, wo er exakt in Richtung der Drahtzubringer-Achse $x_1$ in das Nadelöhr 2 der Einfädelnadel 1 eingeführt wird, wobei ein Überstand t eingehalten wird, welcher zur Bildung der Drahtschlinge erforderlich ist. Die Einhaltung des Überstandes t überwacht ein Draht-Kontaktsensor 17.

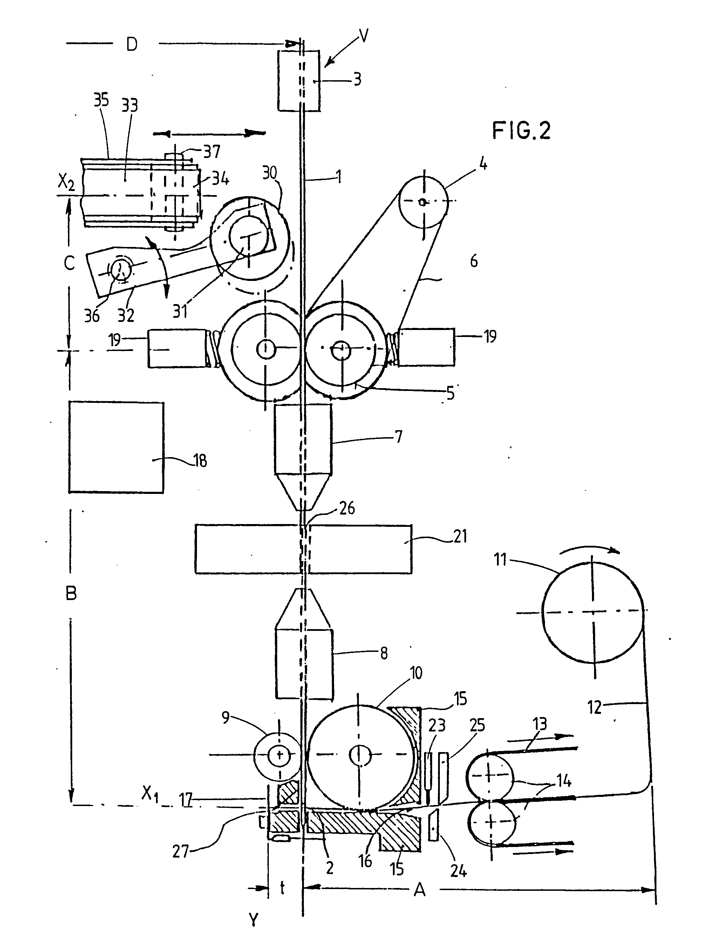

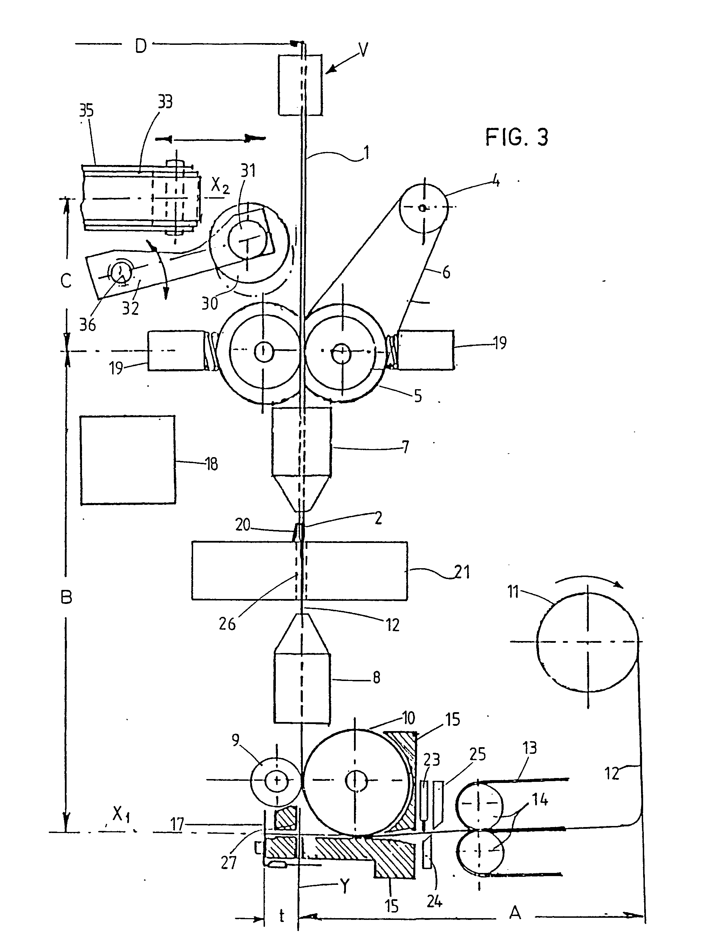

Danach beginnt die Nadel 1 ihren Vertikahub, wie aus den Fig. 2 und 3 ersichtlich ist. Dabei wird der Schneiddraht 12 mit dem Überstand t in den Nadelkanal 27 eingezogen, so daß sich die Schlinge 20 bildet, durch welche die Nadel 1 eine Zugkraft auf den Schneiddraht 12 ausüben kann, ohne daß er aus dem Nadelöhr 2 herausgleitet.

Die Nadel 1 zieht den Draht, auf den durch die Bremsrolle 9 eine gewisse Bremskraft ausgeübt wird, um die Umlenkrolle 10 herum und bewegt ihn im Nadelkanal 27 in der Drahtarbeits-Achse y in Vertikalrichtung nach oben, wobei sie durch den Draht-Zuführkopf 8 durchtritt und die Startbohrung 26 des Werkstücks 21 passiert, wie aus Fig. 3 hervorgeht.

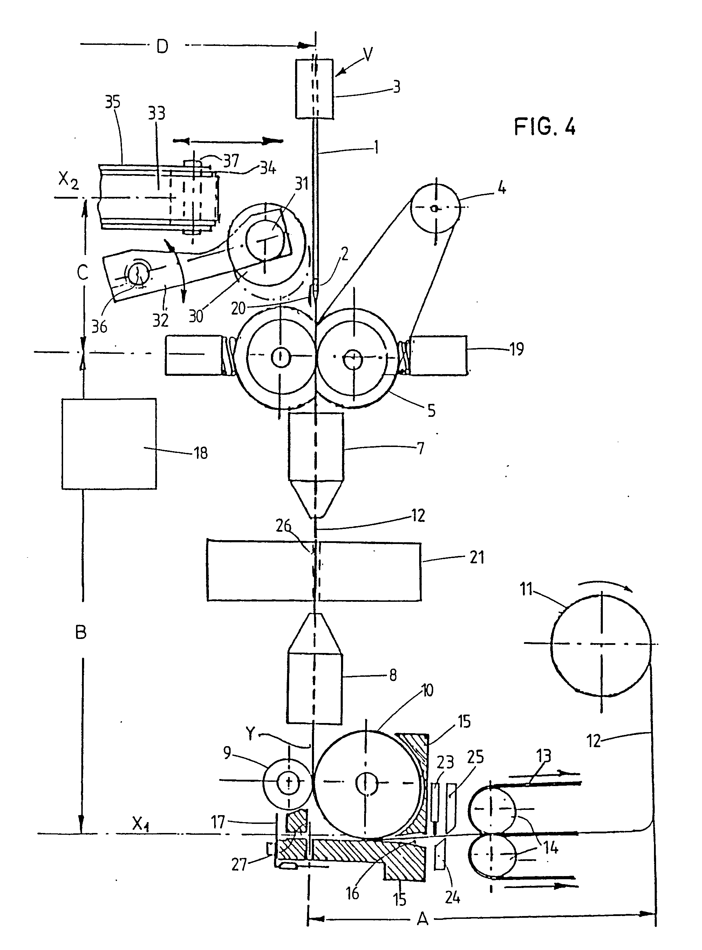

Nach dem Hindurchtreten durch den Draht-Abführungskopf 7 oberhalb des Werkstücks 21 tritt die Nadel 1 mit dem Schneiddraht 12 durch die beiden geöffneten Drahtzugrollen 5, die sich darauf schließen und den Schneiddraht zwischen sich aufnehmen, wie dies in Fig. 4 veranschaulicht ist.

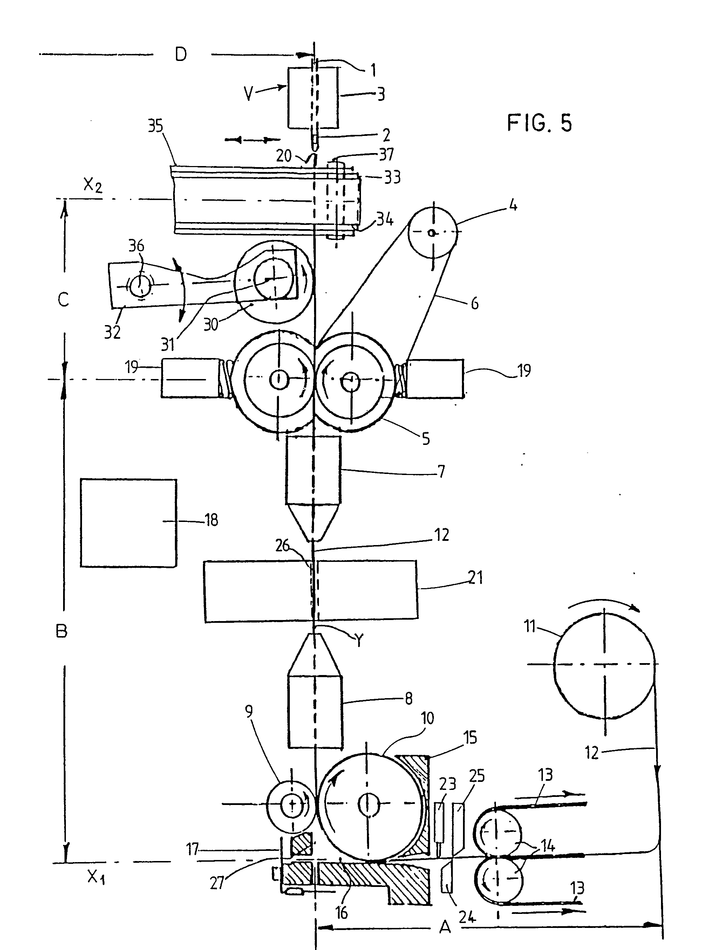

Sobald die Nadel 1 die Höhe der Drahtabförder-Achse $x_2$ nach oben verlassen hat — siehe Fig. 5 — verschiebt sich das Drahtabzuggestell 35 mit den Draht-Abzugsbändern 33 im Bild nach rechts und gelangt in den Bereich der Drahtarbeits-Achse y, in welcher sich der noch immer von der Nadel 1 gezogene Schneiddraht 12 befindet; die Draht-Abzugsbänder 33 ergreifen den Draht und ziehen ihn aus dem Nadelöhr 2 der Nadel 1 heraus, um ihn in der Drahtabförder-Achse $x_2$ weiter zu fördern. Dabei wird der unter Zugspannung stehende Schneiddraht 12 über die Sensor-Rolle 30 gezogen, welche mittels des Geschwindigkeitssensors 31 am in Achse 36 beweglich gelagerten Schwenkarm 32 die Schneiddraht-Momentangeschwindigkeit mißt und das Meßergebnis zu Steuerbefehlen für die Antriebe der Drahtzubringerbänder 13, der Draht-Bremsrolle 9, der Drahtzugrollen 5 und der Draht-Abzugsbänder 33 verarbeitet, um eine gleichförmige Drahtförderung mit konstanter Bremsspannung sicherzustellen.

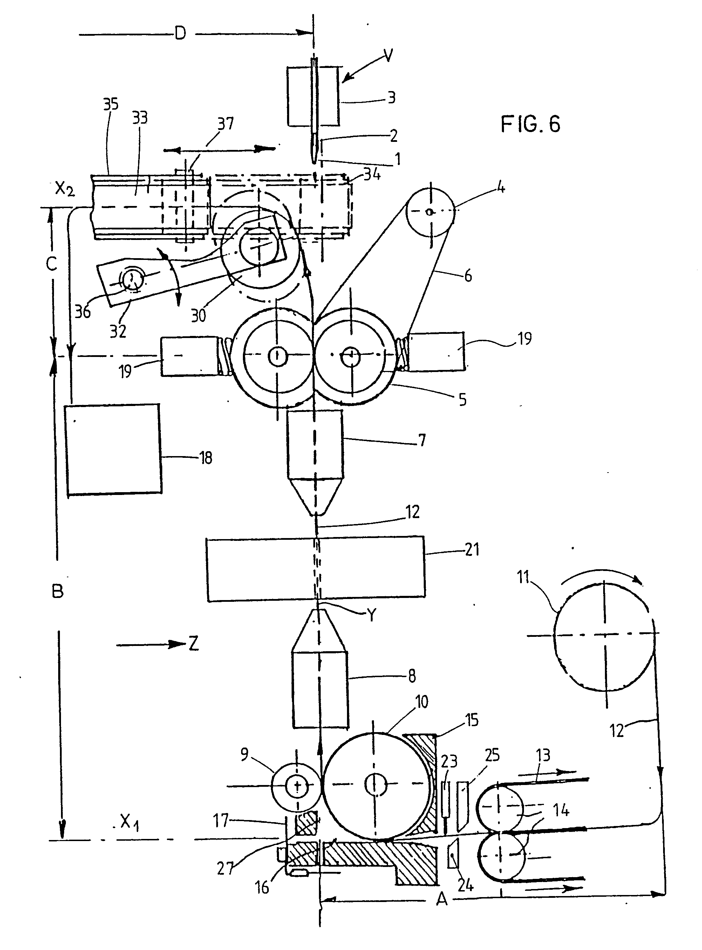

Wie aus Fig. 5 zu ersehen ist, gelangt der Schneiddraht 12 zwischen die Draht-Abzugsbänder 33, während die Nadel 1 ihre obere Ausgangsstellung wieder erreicht hat, so daß der Schneiddraht aus dem Nadelöhr 2 herausgezogen und abgefördert werden kann und — siehe Fig. 6 — in die Drahtsammelkammer 18 gelangt.

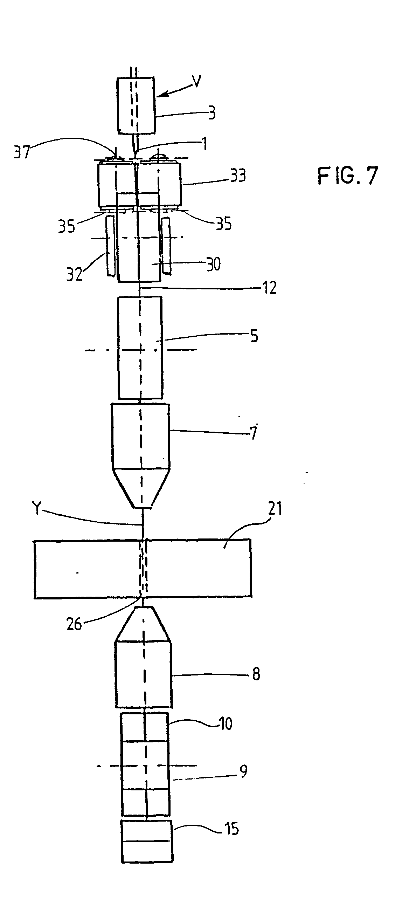

Aus Fig. 7 ist die Anordnung der einzelnen Funktions-Elemente in rechtwinklig geschwenkter Darstellung in Richtung Z gem. Fig. 1 erkennbar.

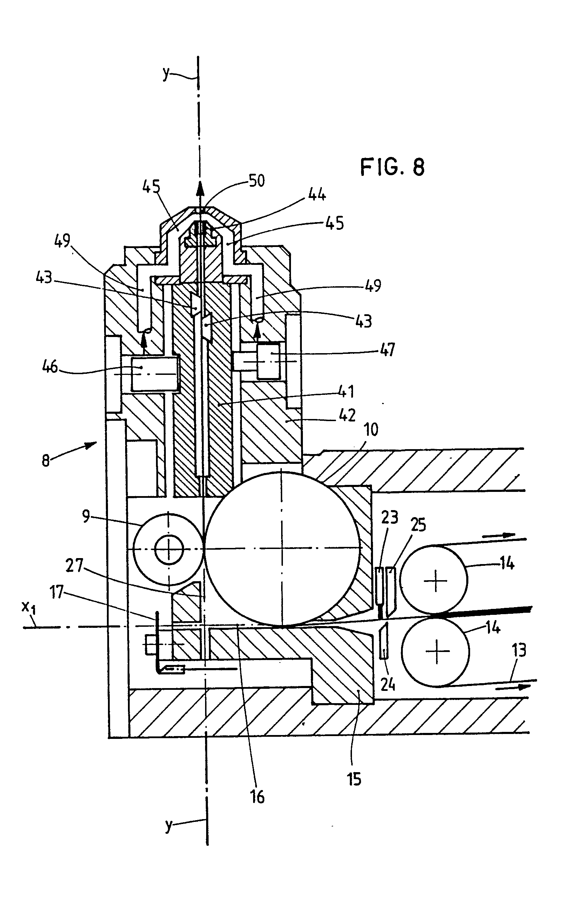

Die Fig. 8 zeigt ebenfalls rein schematisch einen Ausschnitt aus dem unteren Teil der Fig. 1 bis 6. Darin sind noch weitere Einzeheiten des Draht-Zuführkopfes 8 zu erkennen, und zwar ein Drahtleitkern 41, der in einem Geläuse 42 untergebracht istDer Drahtleitkern 41 ist für den Durchtritt der Nadel 1 dimensioniert, besitzt jedoch öffen- und schließbare Führungsdüsen 44 und Stromleitbacken 43 für den Schneiddraht 12. Ferner sind noch Spann- und Justiervorrichtungen 46 und 47 für den Drahtleitkern sowie Zuführungen 48, Spülkanäle 49 und Flüssigkeitsdüsen 50 zu erkennen.

Bei betriebsbedingtem Drahtbruch nimmt die Bremskraft der Draht-Bremsrolle 9 stark ab, wodurch die Drahtzubringerbänder 13 gestoppt werden und auf Rücklauf umgeschaltet wird. Gleichzeitig spult die Drahtvorratsrolle 11 über einen Federzug zurück. Sobald der Draht den Drahtschneide-Sensor 23 passiert, stoppen die Drahtzubringerbänder 13 und der Schneiddraht wird mittels der Drahtschneidevorrichtung 24 gerade abgeschnitten. Aus dem oberen Bruchbereich läuft das obere Drahtende in die Drahtsammelkammer 18 aus. Die Einfädelnadel 1 wird nun bis zur Drahtzubringer-Achse $x_1$ vor den Drahtzuführkanal 16 ausgefahren und die Einfädelprozedur beginnt von neuem wie beschrieben.

Der Verfahrensablauf beim Umschwenken auf eine neue bzw. weitere Startbohrung verläuft prinzipiell in gleicher Weise. Ausgelöst durch entsprechende Sensoren erfolgt ein Stopp der Drahtzubringerbänder 13 und die Drahtschneidevorrichtung 24 durchschneidet den Draht. Der restliche, sich noch im davorliegenden Bereich befindliche Schneiddrallt wird über die Drahtzugrollen 5 und die Draht-Abzugsbänder 33 in die Drahtsammelkammer 18 abtransportiert. Durch einen Stoppimpuls für die Drahtzubringerbänder 13 kann ein Drahtbruch eingeleitet werden, so daß ein Werkstückwechsel vorgenommen werden kann.

Die bevorzugte und im Ausführungsbeispiel dargestellte Ausbildung des Verfahrens und der Vorrichtung mit Drahtförderung in vertikaler Richtung von unten nach oben bringt mehrere Vorteile mit sich. Die Drahtabführung und vor allem die Führungs- und Antriebsvorrichtung 3 für die Einfädelnadel 1 können oberhalb des Draht-Arbeitsabschnitts B angeordnet sein, wo genügend freier Raum verfügbar ist. Auch der gesamte Draht-Abförderabschhnitt D ist jederzeit frei zugänglich, und es können Wartungsarbeiten leicht bewerkstelligt werden. Demgegenüber ist lediglich der Draht-Zubringerabschnitt A unterhalb der Werkstückebene untergebracht, der weniger raumaufwendig und wartungsbedürftig ist.

**Patentansprüche**

1. Verfahren zum selbsttätigen und wiederholbaren Einfädeln des Schneiddrahtes (12) an einer Drahterodiermaschine und zum selbsttätigen Abtrennen des Schneiddrahtes (12) bei Drahtbruch, wobei der von einer Vorratsrolle (11) abgezogene, innerhalb eines in einer Drahtzubringer-Achse $(x_1)$ liegenden Drahtzubringerabschnitts (A) laufende und bremsbare Schneiddraht (12) in den Bereich eines Draht-Arbeitsabschnittes (B) gefördert und dort in das Nadelöhr (2) einer bereitstehenden, in einem Winkel zur Drahtzubringer-Aclse $(x_1)$ verlaufenden Drahtarbeits-Achse (y) verschiebbaren und aus dem Draht-Arbeitsabschnitt (B) entfernbaren Nadel (1) zum Drahteinfädeln mit einem kleinen Überstand (t) eingefädelt, von der Nadel (1) unter Bilden einer Drahtschlinge (20) in einen Nadelkanal (27) in der Richtung der Drahtarbeits-Achse (y) gezogen und durch die im Draht-Arbeitsabschnitt (B) liegende Startbohrung (26) des Werkstücks (21) geleitet und innerhalb eines in einer in einem Winkel zur Drahtarbeits- Achse (y) verlaufenden Drahtabförder-Achse $(x_2)$ liegenden Draht-Förderabschnitts (D) zwischen Draht-Abzugsorganen (33) einer Drahtsammelkammer (18) zugefültt wird.

2. Verfahren nach Anspruch 1, dadurch gekennzeichnet, daß innerhalb eines zwischen dem Draht-Arbeitsabschnitt (B) und dem Draht-Abförderabschnitt (D) eingeschobenen Drahtgeschwindigkeits-Sensorabschnitts (C) die Drahtgeschwindigkeit mittels eines Geschwindigkeits-Sensors (31) gemesson wird.

3. Verfahren nach den Ansprüchen 1 und 2, dadurch gekennzeichnet, daß im Drahtgeschwindigkeits-Sensorabschnitt (C) der Schneiddraht (12) aus der Drahtarbeits-Achse (y) in die Drahtabförder-Achse $(x_2)$ umgelenkt wird.

4. Verfahren nach Anspruch 1, dadurch gekennzeichnet, daß innerhalb des Draht-Zubringerabschnitts (A) und vor der Umlenkung in den Draht-Arbeitsabschnitt (B) mittels eines Sensors (31) der Durchlauf des Schneiddrahts (12) kontinuierlich auf Drahtbruch kontrolliert und bei Drahtbruch oder Werkstückwechsel mittels einer Abschneidevorrichtung (24, 25) abgeschnitten wird.

5. Verfahren nach Anspruch 1, dadurch gekennzeichnet, daß der Schneiddraht in der Drahtarbeitsachse (y) zwischen dem Werkstück (21) und dem Zuführen zu dem Draht-Förderabschnitt (D) öffen-und um den Schneiddraht (12) schließbare Drahtzugrollen (5) durchläuft.

6. Verfahren nach Anspruch 1, dadurch gekennzeichnet, daß die Drahtarbeits-Achse (y) vertikal verläuft.

7. Verfahren nach A6 dadurch gekennzeichnet, daß der Schneiddraht (12) von unten nach oben bewegt wird.

8. Vorrichtung zum selbsttätigen, wiederholbaren Einfädeln des Schneiddrahtes (12) an einer Drahterodiermaschine und zum selbsttätigen Abtrennen des Schneiddrahtes (12) bei Drahtbruch oder Werkstückwechsel, zur Durchführung der Verfahren nach den Ansprüchen 1 bis 7, bestehend aus einem Draht-Zubringerabschnitt (A) mit Zubringerrollen oder -elementen (13, 14), einem Draht-Arbeitsabschnitt (B), innerhalb desselben sich das Werkstück (21) befindet, sowie einem Draht-Abförderabschnitt (D), der mit Abzugsrollen oder -elementen (33, 34, 35) ausgerüstet ist, gekennzeichnet durch

a) im Draht-Arbeitsabschnitt (B) beidseitig des Werkstücks (21) in der Drahtarbeits-Achse (y) angeordnete Zu- und Abführungsköpfe (7, 8) mit Schneiddrahtführungselementen,

b) im Draht-Arbeitsabschnitt (B) in Richtung zum Draht-Abförderabschnitt (D) in der Drahtarbeits-Achse (y) einander gegenüberliegend angeordnete, öffenbare und um den Schneiddraht (12) schließbare, angetriebene Drahtzugrollen (5),

c) außerhalb des Draht-Arbeitsabschnitts (B), jedoch in dessen Drahtarbeits-Achse (y) liegend, eine Führungsund Antriebsvorrichtung (V) für eine Nadel (1) mit einem Nadelöhr (2) zum Einfädeln des Schneiddrahtes (12), die zwischen einer Position außerhalb des Draht-Arbeitsabschnittes (B) und in einer eingefahrenen Stellung im Bereich des Draht-Zubringerabschnitts (A) in ihrer Längsachse hin- und herbewegbar ausgebildet ist.

9. Vorrichtung nach Anspruch 8, dadurch gekennzeichnet, daß in einem zwischen dem Draht-Arbeitsabschnitt (B) und dem Draht-Abförderabschnitt (D) eingeschalteten zusätzlichen Drahtgeschwindigkeits-Sensorabschnitt (C) um eine ortsfeste Achse (36) schwenkbar ein Schwenkarm (32) gelagert ist, der mit einem die Geschwindigkeit des Schneiddrahtes (12) abtastenden Geschwindigkeits-Sensor (31) versehen ist.

10. Vorrichtung nach Anspruch 9, dadurch gekennzeichnet, daß als Abtastorgan des Geschwindigkeits-Sensors (31) eine an den in der Drahtarbeits-Achse (y) laufenden Schneiddraht (12) anpreßbare und von diesem zu etwa einem Viertel ihres Umfangs umschlungene Sensor-Rolle (30) dient.

11. Vorrichtung nach Anspruch 10, dadurch gekennzeichnet, daß die Sensor-Rolle (30) zugleich der Umlenkung des Schneiddrahts (12) aus der Drahtarbeits-Achse (y) im Draht-Arbeitsabschnitt (B) in die Drahtabförder-Achse ($x_2$) des Draht-Abförderabschnitts (D) dient.

12. Vorrichtung nach Anspruch 8, dadurch gekennzeichnet, daß im Bereich des Draht-Zubringerabschnitts (A) zwischen einer Drahtvorratsspule (11) und der Drahtarbeits-Achse (y) des Draht-Arbeitsabschnittes (B) einander gegenüberliegend zwei endlose, über Umlenkrollen (14) geführte, in einer Zubringer-Achse ($x_1$) verlaufende Drahtzubringerbänder (13) angeordnet sind.

13. Vorrichtung nach Anspruch 12, dadurch gekennzeichnet, daß eine oder mehrere Umlenkrollen (14) mit Antrieben versehen sind.

14. Vorrichtung nach Anspruch 8, gekennzeichnet durch eine Draht-Umlenkrolle (10) im Bereich der Überleitung des Schneiddrahtes (12) vom Draht-Zubringerabschnitt (A) in in den Draht-Arbeitsabschnitt (B) zum Umlenken des Schneiddrahtes (12) aus der Zubringer-Achse ($x_1$) in die Drahtarbeits-Achse (y), gegenüber welcher eine Draht-Bremsrolle (9) angeordnet ist, und daß eine der beiden oder beide Rollen den Schneiddraht (12) zwischen sich aufnehmend gegeneinander anstellbar sind.

15. Vorrichtung nach Anspruch 14, dadurch gekennzeichnet, daß die Draht-Bremsrolle (9) mit einer fernsteuerbar bremskraftregelbaren Bremseinrichtung versehen ist.

16. Vorrichtung nach Anspruch 8, gekennzeichnet durch einen in der Drahtzubringer-Achse ($x_1$) liegenden Drahtzuführkanal (16), der einen Nadelkanal (27) kreuzt, welcher in der die Drahtzubringer-Achse ($x_1$) schneidenden Drahtarbeits-Achse (y) liegt.

17. Vorrichtung nach Anspruch 14 bis 16, dadurch gekennzeichnet, daß die Draht-Umlenkrolle (10), die Draht-Bremsrolle (9) und der Nadel- und der Drahtzuführkanal (16, 27) in einem Drahtumlenkblock (15) angeordnet sind.

18. Vorrichtung nach Anspruch 8, dadurch gekennzeichnet, daß die Drahtzugrollen (5) als in Querrichtung zur Drahtarbeits-Achse (y) verschieb- und an den Schneiddraht (12) mittels Spannvorrichtungen (19) anpressbare Drahtzugrollen oder Drahtzugbänder ausgebildet sowie mit fernsteuerbar regelbaren Anstell-Antrieben ausgerüstet sind.

19. Vorrichtung nach Anspruch 8, dadurch gekennzeichnet, daß im Schneiddraht-Abförderabschnitt (D) in der Abförder-Achse ($x_2$) verlaufend und in dieser fernsteuerbar hin- und herbeweglich ein Drahtabzugsgestell (35) angeordnet ist, in welchem mit fernsteuerbar geschwindigkeitsregelbaren Antrieben versehene Abzugsrollen (34) für einander gegenüberliegende und den Schneiddraht (12) zwischen sich führende Draht-Abzugsbänder (33) gelagert sind.

20. Vorrichtung nach Anspruch 19, dadurch gekennzeichnet, daß die Rollenachsen (37) der Abzugsrollen (34) parallel zur Drahtarbeits-Achse (y) verlaufen.

21. Vorrichtung nach Anspruch 8, dadurch gekennzeichnet, daß die Führungsund Antriebsvorrichtung (V) für die Nadel (1) zum Drahteinfädeln im wesentlichen aus der Nadelführung (3) und einem fernsteuerbaren Antrieb für die Hubbewegung der Nadel (1) besteht.

22. Vorrichtung nach Anspruch 8, dadurch gekennzeichnet, daß der von einem Gehäuse (42) umschlossene Zuführungskopf (8) einen mittels Spann- und Justiervorrichtungen (46, 47) versehenen, in die Drahtarbeits-Achse (y) einstellbaren Drahtleitkern (41) aufweist, der mit wenigstens einer öffen- und schließbaren Drahtführungsdüse (44) versehen ist.

23. Vorrichtung nach Anspruch 22, dadurch gekennzeichnet, daß der Zuführungskopf (8) mit an eine Flüssigkeitsquelle und einen Flüssigkeits-Auffangbehälter angeschlossene Zuführungs- und Abführungskanälen (45) und einer mit den Zuführungskanälen (45) in Verbindung stehenden, in der Drahtarbeits-Achse (y) angeordneten Flüssigkeitsdüse (50) versehen ist.

24. Vorrichtung nach den Ansprüchen 17 und 22, dadurch gekennzeichnet, daß der Zuführungskopf (8) mit seinem Gehäuse (42) auf dem Drahtumlenkblock (15) angeordnet ist.

## Revendications

1. Procédé pour l'enfilage automatique et répété du fil électrode (12) d'une machine d'électro-érosion à fil et pour la séparation automatique du fil électrode (12) en cas de sa rupture, avec lequel le fil électrode (12), repris d'une bobine émettrice (11) et se mouvant de façon freinable en dedans d'une section d'amenée à fil (A) située en un axe d'amenée à fil (x1), se transporte dans le domaine d'une section de travail à fil (B), s'enfile là avec une petite projection (t) par le chas (2) d'une aiguille (1) à enfiler, rétractible de la section de travail à fil (B) et déplaçable en l'axe de travail à fil (y), disposé à un certain angle par rapport à l'axe d'amenée à fil (x1), se tire par l'aiguille (1) sous formation d'une boucle de fil (20) dans un conduit à aiguille (27) en direction de l'axe de travail à fil (y), se guide par le trou de départ (26) de la pièc eà usiner (21), située dans la section de travail à fil (B), et en dedans d'une section de décharge à fil (D) qui se trouve en l'axe d'alimentation du fil usé (x2), disposé à un angle déterminé par rapport à l'axe de travail à fil (y), s'alimente entre des organes de reprise (33) à une chambre collectrice à fils (18).

2. Procédé selon revendication 1, dûment caractérisé par ce qu'en dedans d'une section de palpeur pour la vitesse du fil (C), intercalée entre la section de travail à fil (B) et la section de décharge à fil (D), la vitesse du fil se mesure par un paleur (31).

3. Procédé selon les revendications 1 et 2, dûment caractérisé par ce qu'en section de palpeur pour la vitesse du fil (C), le fil électrode (12) se détourne de l'axe de travail à fil (y) en l'axe d'alimentation du fil usé (x2).

4. Procédé selon revendication 1, dûment caractérisé par ce qu'en dedans de la section d'amenée à fil (A) et avant le détournement en la section de travail à fil (B), le passage du fil électrode (12) se contrôle de façon continuelle à l'aide d'un palpeur pour d'éventuelles ruptures et lors d'une rupture de fil ou changement de pièce, le fil se coupe par un mécanisme de coupage (24, 25).

5. Procédé selon revendication 1, dûment caractérisé par ce que le fil électrode (12), en l'axe de travail à fil (y), soit entre la pièce à usiner (21) et l'introduction dans la section de décharge à fil (D), passe par des poulies de reprise à fil (5) qui peuvent s'ouvrir et s'enfermer autour du fil électrode (12).

6. Procédé selon revendication 1, dûment caractérisé par ce que l'axe de travail à fil (y) est disposé verticalement.

7. Procédé selon revendication 6, dûment caractérisé par ce que le fil électrode (12) se meut de bas en haut.

8. Dispositif pour l'enfilage automatique et répété du fil électrode (12) d'une machine d'électro-érosion à fil et pour la séparation automatique du fil électrode (12) en cas de sa rupture ou de changement de pièce pour exécuter les procédés selon les revendications 1 à 7, comportant une section d'amenée à fil (A) avec des poulies ou éléments d'amenée (13, 14), une section de travail à fil (B) où se trouve la pièce à usiner (21) et une section de décharge à fil (D) équipée des poulies ou éléments de décharge (33, 34, 35), dûment caractérisé par

a) des têtes d'amenée et de décharge avec des éléments de guidage pour le fil électrode (12) disposées en section de travail à fil (B), des deux côtés de la pièce à usiner (21), en l'axe de travail à fil (y),

b) des poulies de repise à fil (5) disposées en dedans de la section de travail à fil (B), vers la section de décharge à fil (D), l'une opposée à l'autre en l'axe de travail à fil (y), poulies entraînées qui peuvent s'ouvrir et s'enfermer autour du fil électrode (12).

c) un système de guidage et d'entraînement (V), en dehors de la section de travail à fil (B) mais en dedans de son axe de travail à fil (y), pour une aiguille (1) ayant un chas (2) pour introduire le fil électrode (12), aiguille (1) faisant la navette en son axe longitudinal entre une position en dehors de la section de travail à fil (B) et une position de rentrée en le domaine de la section d'amenée à fil (A).

9. Dispositif selon revendication 8 dûment caractérisé par ce qu'en une section de palpeur pour la vitesse du fil (C), entre la section de travail à fil (B) et la section de décharge à fil (D), sur un essieu stationnaire, un support pivotant (32) a été logé qui est muni d'un palpeur (31) déterminant la vitesse du fil électrode (12).

10. Dispositif selon revendication 9, dûment caractérisé par une poulie de palpeur (30) qui peut être pressée contre le fil électrode (12) se mouvant en l'axe de travail à fil (y) tout en épousant un quart environ de la circonférence de cette poulie servant d'organe de palpage au palpeur (31).

11. Dispositif selon revendication 10, dûment caractérisé par ce que la poulie de palpeur (30) sert en même temps à détourner le fil électrode (12) de l'axe de travail à fil (y), en section de travail à fil (B), en l'axe d'alimentation du fil usé (x2) de la section de décharge à fil (D).

12. Dispositif selon revendication 8, dûment caractérisé par deux bandes d'amenée sans fin à fil (13), l'une opposée à l'autre, montées sur des rouleaux de renvoi (14) et situées en u axe d'amenée à fil (x1), dans le domaine de la section d'amenée à fil (A), soit entre la bobine émettrice (11) et l'axe de travail à fil (y) de la section de travail à fil (B).

13. Dispositif selon revendication 12, dûment caractérisé par ce qu'un seul ou plusieurs des rouleaux de renvoi (14) ont été pourvus des entraînements.

14. Dispositif selon revendication 8, dûment caractérisé par une poulie de détournement à fil (10) das le domaine où s'effectue le transfert du fil électrode (12) de la section d'amenée à fil (A) en la section de travail à fil (B) pour détourner le fil électrode (12) de l'axe d'amenée (x1) en l'axe de travail à fil (y), opposée à laquelle on a disposé une poulie de freinage à fil (9), et par ce qu'une seule ou les deux poulies peuvent être mises en prise tout en recevant le fil électrode (12) entre elles.

15. Dispositif selon revendication 14, dûment caractérisé par ce que la poulie de freinage à fil (9) est dotée d'un système de freinage télécommandé à puissance réglable.

16. Dispositif selon revendication 8, dûment caractérisé par un conduit d'amenée de fil (16) situé en l'axe d'amenée à fil (x1) et croisant un conduit à aiguille (27) qui se trouve en l'axe de travail à fil (y) coupant l'axe d'amenée à fil (x1).

17. Dispositif selon les revendications 14 à 16, dûment caractérisé par ce que la poulie de détournement à fil (10), la poulie de freinage à fil (9), le conduit à aiguille (27) et le conduit d'amenée de fil (16) ont été disposés en un bloc de détournement à fil (15).

18. Dispositif selon revendication 8, dûment caractérisé par ce que les poulies de reprise à fil (5) ont été conçues en tant que poulies ou bandes de traction à fil déplaçables perpendiculairement à l'axe de travail à fil (y), poulies pressant contre le fil électrode (12) à l'aide des éléments de serrage (19) et munies des entraînements téléréglables pour mise en prise.

19. Dispositif selon revendication 8, dûment caractérisé par un bâti de traction à fil (35) télécommandé et faisant la navette en l'axe d'alimentation du fil usé (x2), soit en section de décharge à fil (D), dans lequel ont été logés des rouleaux tracteurs (34) dotés des entraînements télécommandés à vitesse réglable et destinés aux bandes de reprise à fil (33), opposées l'une à l'autre et transportant le fil électrode (12) entre elles.

20. Dispositif selon revendication 19, dûment caractérisé par ce que les arbres (37) des rouleaux tracteurs (34) ont été disposés parallèlement à l'axe de travail à fil (y).

21. Dispositif selon revendication 8, dûment caractérisé par ce que le système de guidage et d'entraînement (V) pour l'aiguille (1) à enfiler comport e essentiellement le guide-aiguille (3) et le module d'entraînement à télécommande pour la course de l'aiguille (1).

22. Dispositif selon revendication 8, dûment caractérisé par ce que la tête d'amenée (8) enfermée par un coffret (42), comporte un noyau pilote à fil (41) réglable sur l'axe de travail àfil (y) et doté des éléments de serrage et d'ajustage ainsi que au moins d'une seule tuyère de guidage à fil (44) pouvant se ouvrir et se fermer.

23. Dispositif selon revendication 22, dûment caractérisé par ce que la tête d'amenée (8) a été munie des conduits de amenée et de décharge (45), connectés à une source de liquide et à un réservoir collecteur pour ce liquide, et d'une tuyère de liquide (50) étant en liaison avec les conduits d'amenée (45) et disposée en l'axe de travail à fil (y).

24. Dispositif selon les revendications 17 et 22, dûment caractérisé par ce que la téte d'amenée (8) et son coffret (42) ont été disposés sur le bloc de détournement à fil (15).

**Claims**

1. Method for automatically and repeatedly threading the wire electrode (12) of an EDM and for automatically separating the wire electrode (12) in case of its breakage where the wire electrode taken from a supply reel (11), running and brakable within a wire feed section (A) respectively in its axis (x1), is fed into the area of a wire operating section (B) and there it is threaded with a small projection into the eye (2) of a wire-threading needle (1), available at this position, displaceable in a wire operating axis (y) arranged at a certain angle to the wire feed axis (x1) and removable from the wire operating section (B), pulled by the needle (1) with simultaneous formation of a wire loop (20) into a needle channel (27) towards the wire operating axis (y), passed through the starting bore (26) of the workpiece (21) located within the wire operating section (B) and fed, between wire take-off assemblies (33) into a wire collecting chamber (18) within the wire discharging section (D) and in the waste feed axis (x2) arranged at a certain angle to the operating axis (y).

2. Method according to claim 1, characterized in that within a speed sensor section (C), inserted between the wire operating section (B) and the wire discharging section (D), the speed of the wire is measured by a sensor (31).

3. Method according to claims 1 and 2, characterized in that within the wire speed sensor section (C), the wire electrode (12) is deviated from the wire operating axis (y) into the waste feed axis (x2).

4. Method according to claim 1, characterized in that, within the wire feed section (A) and prior to the deviation into the wire operating section (B) by a sensor (31), the pass of the wire electrode (12) is continuously checked for breakage and in case of wire breakage or change of workpiece, it is cut off using a cutting assembly (24, 25).

5. Method according to claim 1, characterized in that the wire electrode (12), in the wire operating axis (y), between the workpiece (21) and the feed into the wire discharging section (D), passes wire take-off pulleys (5) that can open and close around the wire electrode (12).

6. Method according to claim 1, characterized in that the wire operating axis (y) has been arranged vertically.

7. Method according to claim 6, characterized in that the wire electrode (12) is moved from the bottom to the top.

8. Device for automatically and repeatedly threading the wire electrode (12) of an EDM and for automatically separating the wire electrode (12) in case of wire breakage or workloading for the performance of the method according to claims 1 to 7, consisting of a wire feed section (A) with feed pulleys or elements (13, 14), a wire operating section (B) comprising the workpiece (21) and a wire discharging section (D) which has been fitted with extracting pulleys or elements (33, 34, 35), characterized by

a) Feeding/discharging heads (7, 8) with wire electrode guiding elements arranged within the wire operating section (B), at both sides of the workpiece (21), and in the wire operating axis (y),

b) Wire take-off pulleys (5), driven and opposite to each other within the wire operating section (B), towards the wire discharging section (D), and in the wire operating axis (y), that can open and close around the wire electrode (12),

c) Guiding and driving assembly (V), outside the wire operating section (B) but in its wire operating axis (y), for a needle (1) with an eye (2) to thread the wire electrode (12), and this needle (1) has been conceived for a reciprocating movement in its longitudinal axis between a position out side the wire operating section (B) and a 'moved-in' position within the area of the wire feed section (A).

9. Device according to claim 8, characterized by a swivelling arm (32) being located within a additional wire speed sensor section (C), between the wire operating section (B) and the wire discharging section (D), lodged slewably on a stationary axle (36), and bearing a sensor (31) for the speed of the wire electrode (12).

10. Device according to claim 9, characterized in that a sensor pulley (30) that can be pressed onto the wire electrode (12) running in the wire operating axis (y) and this pulley being looped by the wire electrode (12) up to about one quarter of its circumference serves as a sensing assembly for the sensor (31).

11. Device according to claim 10, characterized in that the sensor pulley (30) serves at the same time to deviate the wire electrode (12) from the wire operating axis (y) within the wire operating section (B) into the waste feed axis (x2) of the wire discharging section (D).

12. Device according to claim 8, characterized in that within the reach of the wire feed section (A), between a wire supply reel (11) and the wire operating axis of the wire operating section (B), two endless wire feed belts (13) have been arranged in a feed axis (x1), opposite to each other, using tail rollers (14).

13. Device according to claim 12, characterized in that a single or several tail rollers (14) have been provided with drives.

14. Device according to claim 8, characterized by a wire deviating pulley (10) in the area of the delivery of the wire electrode (12) from the wire feed section (A) into the wire operating section (B) for the deviation of the wire electrode (12) from the wire feed axis (x1) into the wire operating axis (y), opposite to same a wire braking pulley (9) has been arranged so that either or both pulleys receiving the wire electrode (12) between them can approach each other.

15. Device according to claim 14, characterized in that the wire braking pulley (9) has been provided with a remote-controllable braking assembly of which the brake power can be adjusted.

16. Device according to claim 8, characterized by a wire feed channel (16), located in the wire feed axis (x1) and crossing a needle channel (27) in the wire operating axis (y) which cuts the wire feed axis (x1).

17. Device according to claims 1 to 16, characterized in that the wire deviating pulley (10), the wire braking pulley (9) as well as the needle channel and the wire feed channel (16, 27) have been arranged in a wire deflection block (15).

18. Device according to claim 8, characterized in that the wire take-off pulleys (5) have been fitted with remote-controllable approach drives and designed as wire traction pulleys or belts, movable transversally to the wire operating axis (y) and pressing against the wire electrode (12) by means of strechers (19).

19. Device according to claim 8, characterized in that within the wire discharging section (D), a wire extraction frame (35), capable of remote-controlled reciprocating in the waste feed axis (x2), has been arranged and comprises extracting rollers (34) provided with drives of which the speed is remote-controllable for oppositely arranged wire extraction belts (33) which convey the wire electrode (12) between themselves.

20. Device according to claim 19, characterized in that the shafts (37) of the extracting rollers (34) have been arranged parallel to the wire operating axis (y).

21. Device according to claim 8, characterized in that the guiding and driving assembly (V) for the wire-threading needle (1) consists essentially of the needle guide (3) and a remote-controllable drive for the stroke of the needle (1).

22. Device according to claim 8, characterized in that the feeding head (8) enclosed by a case (42) comprises a wire guide core (41) provided with tensioning and adjusting elements (46, 47) and settable to the wire operating axis (y), and at least one wire guiding nozzle (44) which can open and close.

23. Device according to claim 22, characterized in that the feeding head (8) has been provided with feeding/discharging channels (45), linked to a liquid source and a liquid collector, as well as with a liquid nozzle (50) linked to the feeding channels (45) and arranged in the wire operating axis (y).

24. Device according to claims 17 to 22, characterized in that the feeding head (8) has been arranged, together with its case (42), on the wire deflection block (15).

EP 0 362 545 B1

FIG. 1

FIG.2

FIG. 3

FIG. 4

FIG. 5

FIG. 6

FIG. 7

FIG. 8